# EUROPÄISCHE PATENTSCHRIFT

(11) **EP 2 926 323 B1**
(45) Veröffentlichungstag und Bekanntmachung des Hinweises auf die Patenterteilung: **14.12.2022**
(21) Anmeldenummer: 13783302.6
(22) Anmeldetag: 23.10.2013
(51) Int. Cl.: G07D 7/202, G06V 10/147

(54) **VERFAHREN UND VORRICHTUNG ZUR ÜBERPRÜFUNG EINER WINKELABHÄNGIG EINGEBRACHTEN LASERMARKIERUNG AUF EINER OBERFLÄCHE EINES DOKUMENTES**
METHOD AND DEVICE FOR TESTING A LASER MARKING PRODUCED IN ACCORDANCE WITH AN ANGLE ON A DOCUMENT SURFACE
DISPOSITIF ET PROCEDE PERMETTANT DE VERIFIER UN MARQUAGE LASER REALISE EN FONCTION D'UN ANGLE SUR LA SURFACE D'UN DOCUMENT

(30) Priorität: 30.11.2012 DE 102012111652
(43) Veröffentlichungstag der Anmeldung: 07.10.2015
(73) Patentinhaber: Bundesdruckerei GmbH, 10969 Berlin (DE)
(72) Erfinder: OSYRA, Siegmund, 85560 Ebersberg (DE)
(74) Vertreter: Mammel und Maser Patentanwälte PartG mbB
(86) Internationale Anmeldenummer: PCT/EP2013/072108
(87) Internationale Veröffentlichungsnummer: WO 2014/082799

(56) Entgegenhaltungen:
- EP-A2- 0 219 012
- WO-A1-91/19614
- WO-A2-2004/013817
- US-A1- 2008 112 596

## Beschreibung

Die Erfindung betrifft ein Verfahren und eine Vorrichtung zum Überprüfen einer winkelabhängig eingebrachten Lasermarkierung auf einer Oberfläche des Dokumentes.

Solche winkelabhängig eingebrachten Lasermarkierungen sind allgemein unter dem Begriff CLI (Changeable Laser Image) und MLI (Multiple Laser Image) bekannt. Diese Lasermarkierungen können aus einem Bild- und einem Textmerkmal bestehen, welche aus unterschiedlichen Betrachtungswinkeln jeweils getrennt erfassbar sind. Solche Lasermarkierungen stellen eines von mehreren Sicherheitsmerkmalen eines Dokumentes dar, welche bevorzugt in Ausweisen, Zutrittskarten oder dergleichen eingesetzt werden.

Eine automatische Verifikation von solchen Lasermarkierungen beschränkt sich derzeit bei den Bildmerkmalen der Lasermarkierung auf eine vereinfachte Prüfung, bei welchem ein gewisser Schwärzungsgrad überprüft und als Indikator für ein ordnungsgemäßes Bildmerkmal betrachtet wird. Bei dieser Überprüfung kann ein falsches oder unvollständiges Bildmerkmal nicht erfasst werden. Darüber hinaus kann auch ein Versatzfehler zwischen dem Bild- oder Textmerkmal zu einer Umrandung der Lasermarkierung nicht erkannt werden.

Aus der US 2008/112596 A1 ist ein Verfahren zur Ermittlung eines Reflexionsvermögens von Albedo-Bildelementen auf einer Oberfläche eines Sicherheitsdokumentes bekannt. Aus verschiedenen Richtungen wird das Reflexionsvermögen der Albedo-Bildelemente aufgenommen, die eine Oberflächenstruktur bilden, welche mittels eines Lasers hergestellt werden kann. Aus dem aus verschiedenen Richtungen ermittelten Reflexionsvermögen wird eine sogenannte Albedo-Funktion ermittelt, welche als zufällige Schlüsseldaten in einer Vielfalt von kryptographischen Anwendungen dienen kann.

Aus der WO 2004/013817 A1 ist ein Verfahren und eine Vorrichtung zur Bearbeitung von Wertdokumenten mit einer Prüfung eines Sicherheitselementes des Wertdokumentes bekannt. Dabei werden von einem beleuchteten Bereich des Sicherheitselementes aus verschiedenen Richtungen reflektiertes Licht von Sensoren mit Polarisationsfiltern erfasst und geprüft.

Der Erfindung liegt deshalb die Aufgabe zugrunde, sowohl ein Verfahren als auch eine Vorrichtung vorzuschlagen, bei der ein Bild- oder Textmerkmal der Lasermarkierung auf seine Existenz, Vollständigkeit und seinen Versatz relativ zur CLI/MLI-Umrandung hin erfasst werden kann.

Diese Aufgabe wird durch ein Verfahren nach Anspruch 1 gelöst, bei dem eine zu verifizierende Abbildung eines Bild- oder Textmerkmals der Lasermarkierung mit einer Bilderfassungseinrichtung erfasst wird, die in einem Winkel α zur Normalen der Oberfläche des Dokumentes ausgerichtet und die perspektivisch erfasste Abbildung in einem weiteren Schritt entzerrt wird, so dass darauffolgend ein von einer Dokumentenverwaltung bereitgestellter und dem zu überprüfenden Dokument zugehöriger Datensatz in einer Auswerteeinrichtung ein Bildmuster erzeugt wird. Mittels eines Patternmatching-Verfahrens wird die zu verifizierende Abbildung gesucht und ermittelt. Anschließend wird die ermittelte Abbildung des Text- oder Bildmerkmals mit dem Bildmuster auf dessen Übereinstimmung verglichen und ein Korrelationswert bestimmt. Aus diesem Korrelationswert kann zunächst die Existenz der zu verifizierenden Abbildung ermittelt werden. Diese liegt dann vor, wenn der Korrelationswert einen vorbestimmten Prozentsatz erreicht oder überschritten hat, das heißt, dass eine Übereinstimmung des Bildmusters mit der zu verifizierenden Abbildung zumindest die vorgegebene prozentuale Übereinstimmung aufweist. Sofern ein höherer Korrelationswert zugrunde gelegt wird, kann durch den Vergleich der zu verifizierenden Abbildung mit dem Bildmuster auch eine inhaltliche Übereinstimmung festgestellt werden.

Eine bevorzugte Ausgestaltung des Verfahrens sieht vor, dass die Oberfläche des Dokumentes während dem Erfassen einer zu verifizierenden Abbildung von der Lasermarkierung durch die Bilderfassungseinrichtung mit zumindest einer Beleuchtungseinrichtung bestrahlt wird. Dabei wird bevorzugt eine Infrarotleuchte verwendet. Durch die Beleuchtungseinrichtung, welche vorzugsweise in einem geneigten Winkel zur Oberfläche des Dokumentes positioniert wird, können weitere störende Markierungs- oder Druckbestandteile des Dokumentes eliminiert werden, so dass für eine nachfolgende Verifikation optimale Bedingungen geschaffen werden und die Verifikation durch störende Muster oder Merkmale in der Nähe der Lasermarkierung nicht beeinträchtigt wird.

Des Weiteren wird zur Durchführung des Verfahrens bevorzugt eine Skalierung des Datensatzes zur Anpassung an die Größe der zu verifizierenden Abbildung durchgeführt, um einen Vergleich der Abbildung mit dem Datensatz zu ermöglichen.

Bei dem Verfahren zur Überprüfung der winkelabhängig eingebrachten Lasermarkierung wird eine zweite Bilderfassungseinrichtung eingesetzt, welche in einem Winkel α zur Normalen entgegengesetzt zur ersten Bilderfassungseinrichtung ausgerichtet ist. Dadurch kann für eine vollständige Verifikation der Lasermarkierung das Dokument in einer ruhenden Position zu den Bilderfassungseinrichtungen verbleiben, so dass mit einer Bilderfassungseinrichtung eine Abbildung des Bildmerkmals und mit der zweiten Bilderfassungseinrichtung eine Abbildung des Textmerkmals erfasst wird. In der Auswerteeinheit werden diese Daten zusammengeführt sowie miteinander verglichen und überprüft.

Zur weiteren maschinellen Verifikation der winkelabhängig eingebrachten Lasermarkierung wird eine zusätzliche Bilderfassungseinrichtung eingesetzt, deren Strahlachse senkrecht zur Oberfläche des Dokumentes angeordnet ist, durch welche die Umrisskanten der Lasermarkierung erfasst und die Lage der Umrandung der Lasermarkierung ermittelt werden. Dadurch kann vorzugsweise mit Hilfe der verallgemeinerten Hough-Transformation über die Gradienten der ermittelten Umrisslinien oder -kanten die Lasermarkierung auf dem Dokument ermittelt werden.

Bevorzugt wird koaxial zur Strahlachse der zusätzlichen Bilderfassungseinrichtung eine Auflichtbeleuchtung auf das Dokument gerichtet. Dadurch werden die Umrisskanten der Lasermarkierung besonders sichtbar gemacht.

Die Position der Umrandung von der Lasermarkierung wird bevorzugt mit der Position des Bild- und/oder Textmerkmals der Lasermarkierung verglichen, um einen Positionsversatz zwischen dem Bild- und/oder Textmerkmal und der Umrandung der Lasermarkierung zu ermitteln. Dadurch kann eine zusätzliche Überprüfung auf die Korrektheit der eingebrachten Bild- und Textmerkmale in der Lasermarkierung ermöglicht werden, welche zur Qualitätssicherung und Verbesserung der Verifikation dient.

Die der Erfindung zugrunde liegende Aufgabe wird des Weiteren durch eine Vorrichtung nach Anspruch 7 zur Uberprüfung einer winkelabhängig eingebrachten Lasermarkierung auf einer Oberfläche eines Dokumentes gelöst, welche zumindest eine Bilderfassungseinrichtung aufweist, die in einem Winkel α zur Normalen der Oberfläche des Dokumentes angeordnet ist und mit zumindest einer Beleuchtungseinrichtung, welche die Oberfläche des Dokumentes ausleuchtet, wobei die zumindest eine Bilderfassungseinrichtung mit einer Auswerteeinrichtung verbunden ist, welche eine durch die Bilderfassungseinrichtung erfasste Abbildung eines Bild- oder Textmerkmals der Lasermarkierung des Dokumentes erfasst und mit einem Datensatz aus einer Datenverwaltung verifiziert. Dieser konstruktiv einfache Aufbau ermöglicht eine schnelle und einfache Überprüfung von der zumindest einen winkelabhängig eingebrachten Lasermarkierung auf der Oberfläche des Dokumentes, die sich von Dokument zu Dokument ändert.

Erfindungsgemäß ist eine weitere Bilderfassungseinrichtung zur Überprüfung der winkelabhängig eingebrachten Lasermarkierung vorgesehen, die in einem Winkel α zur Normalen der Oberfläche des Dokumentes und spiegelbildlich zur ersten Bilderfassungseinrichtung angeordnet ist. Dadurch kann mit einer der beiden Bilderfassungseinrichtungen beispielsweise das Bildmerkmal der Lasermarkierung und mit der anderen Bilderfassungseinrichtung das Textmerkmal der Lasermarkierung erfasst werden, wobei das Dokument selbst in einer Ruheposition an einem vorgesehenen Prüfort verbleiben kann.

Die zumindest eine Bilderfassungseinrichtung ist in einem Winkel von 10° bis 25°, insbesondere 13° bis 18°, angeordnet. Dadurch können die Bildoder Textmerkmale der Lasermarkierung optimal erfasst werden, da unter diesem Winkel der maximale Kontrast des Text- oder Bildmerkmals erzielbar ist.

Für die Überprüfung der winkelabhängig eingebrachten Lasermarkierung kann eine weitere Bilderfassungseinrichtung vorgesehen sein, deren Strahlachse in der Normalen zur Oberfläche des Dokumentes liegt und der eine Auflichtbeleuchtung zur koaxialen Belichtung zur Strahlachse der Bilderfassungseinrichtung zugeordnet ist. Diese weitere Bilderfassungseinrichtung ermöglicht die Erfassung einer Abbildung der Umrisskanten der Lasermarkierung für deren Positionsbestimmung auf dem Dokument. Dadurch kann zusätzlich in der Auswerteeinrichtung eine weitere Überprüfung bezüglich eines Positionsversatzes zwischen dem Bild- und/oder Textmerkmal zur Umrandung der Lasermarkierung erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht einer Vorrichtung zum Überprüfen einer winkelabhängig eingebrachten Lasermarkierung auf einer Oberfläche eines Dokumentes,
Figur 2 eine Abbildung von einer unter einem Winkel α zum Dokument geneigten Bilderfassungseinrichtung des zu überprüfenden Dokumentes,
Figur 3 eine Abbildung gemäß Figur 2 zur Bestimmung der Entzerrungsparameter,
Figur 4 eine schematische Darstellung des entzerrten Dokumentes gemäß Figur 3 während einem ersten Schritt zur Überprüfung der winkelabhängig eingebrachten Lasermarkierung,
Figur 5 eine schematisch vergrößerte Darstellung der Lasermarkierung zur Überprüfung eines Bildmerkmals der Lasermarkierung,
Figur 6 eine schematisch vergrößerte Darstellung zur Überprüfung eines Textmerkmals der Lasermarkierung und
Figur 7 eine schematisch vergrößerte Darstellung zur Positionserkennung der Lasermarkierung.

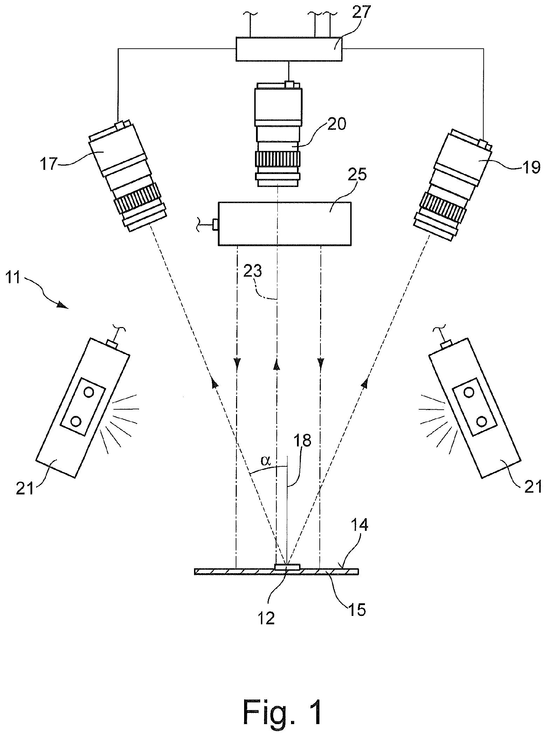

In Figur 1 ist schematisch eine Vorrichtung 11 zum Überprüfen einer winkelabhängig eingebrachten Lasermarkierung 12 auf einer Oberfläche 14 eines Dokumentes 15 dargestellt. Bei diesem Dokument 15 kann es sich beispielsweise um ein Wert- oder Sicherheitsdokument handeln, welches ein oder mehrere Sicherheitsmerkmale umfasst. Die Lasermarkierung 12 stellt beispielsweise ein Sicherheitsmerkmal dar.

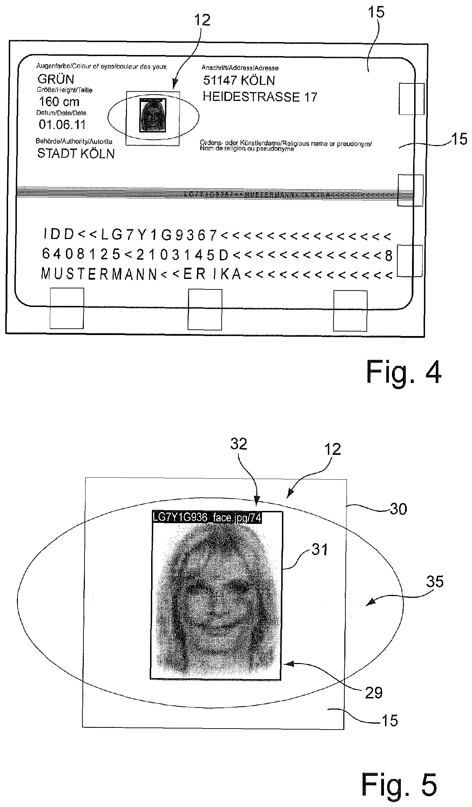

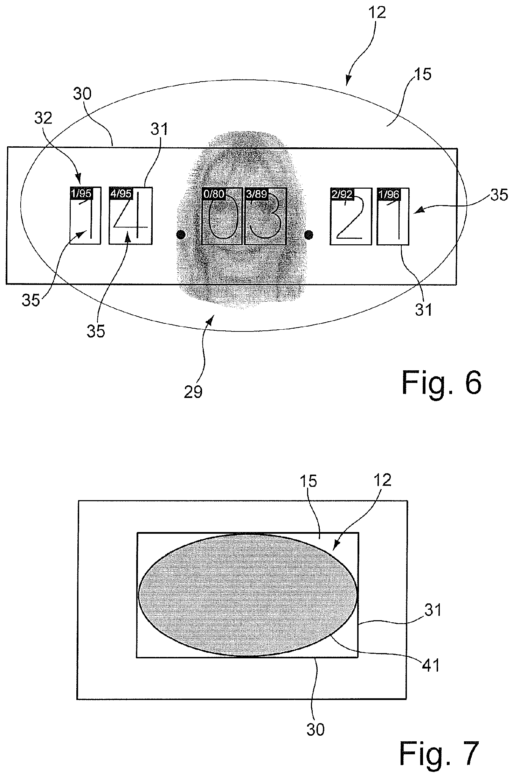

Die Lasermarkierung 12 kann ein Bildmerkmal 29 und Textmerkmal 35 umfassen, wie dies in den Figuren 5 und 6 dargestellt ist. Diese Lasermarkierungen 12 werden als CLI oder MLI bezeichnet.

Das Dokument 15 liegt zur Überprüfung der Lasermarkierung 12 auf einem Gegenstand oder einer Prüffläche auf oder wird zur Prüfung in einer stillstehenden Prüfposition durch eine Transporteinrichtung oder dergleichen gehalten.

Die Vorrichtung 11 umfasst eine erste Bilderfassungseinrichtung 17, welche in einem Winkel α zur Normalen 18 der Oberfläche 14 des Dokuments 15 angeordnet ist. Die Bilderfassungseinrichtung 17 ist vorzugsweise als Flächenkamera ausgebildet, insbesondere als CCDoder CMOS-Kamera.

Benachbart zur Bilderfassungseinrichtung 17 ist zumindest eine Beleuchtungseinrichtung 21 angeordnet, welche ebenfalls in einem Winkel zur Normalen 18 bezüglich deren Beleuchtungsachse ausgerichtet ist. Der Neigungswinkel der Beleuchtungseinrichtung 21 ist bevorzugt größer als der der Bilderfassungseinrichtung zur Normalen 18. Die Beleuchtungseinrichtung 21 ist bevorzugt als IR-Beleuchtung ausgebildet. Diese Beleuchtungseinrichtung 21 weist zumindest einen Beleuchtungsfleck auf, der größer als die Lasermarkierung 12 ist. Vorteilhafterweise wird das gesamte Dokument 15 ausgeleuchtet. Bevorzugt ist spiegelbildlich zur Normalen 18 eine Beleuchtungseinrichtung 21 angeordnet. Die Vorrichtung 11 weist noch eine zweite Bilderfassungseinrichtung 19 auf, welche der Normalen 18 gegenüber liegend zur ersten Bilderfassungseinrichtung 17 angeordnet ist. Diese Bilderfassungseinrichtung 19 ist im gleichen Neigungswinkel wie die erste Bilderfassungseinrichtung 17 angeordnet.

Eine weitere Bilderfassungseinrichtung 20 ist zur Positionserkennung der Lasermarkierung 12 vorgesehen. Eine Strahlachse 23 der Bilderfassungseinrichtung 20 liegt in der Normalen 18 oder ist parallel zur Normalen 18 ausgerichtet. Koaxial zur Strahlachse 23 der Bilderfassungseinrichtung 20 ist eine Auflichtbeleuchtung 25 auf die Oberfläche 14 des Dokumentes 15 zugerichtet. Diese Auflichtbeleuchtung 25 weist im Bereich der Strahlachse 23 einen Freiraum auf, damit eine Abbildung der Lasermarkierung 12 durch die Bilderfassungseinrichtung 20 erfasst werden kann.

Die Anordnung der zwei unter einem Winkel α angeordneten Bilderfassungseinrichtungen 17, 19 weist den Vorteil auf, dass mit der einen Bilderfassungseinrichtung 17, 19 beispielsweise ein Bildmerkmal 29 der Lasermarkierung und mit der anderen Bilderfassungseinrichtung 19, 17 ein Textmerkmal erfasst werden kann, wobei das Dokument 12 in Ruhe verbleibt.

Die Bilderfassungseinrichtungen 17, 19, 20 sowie die zumindest eine Beleuchtungseinrichtung 21 kommunizieren kabelgebunden oder drahtlos mit einer Auswerteeinrichtung 27, so dass diese von der Auswerteeinrichtung 27 angesteuert werden, aber auch die Auswerteeinrichtung 27 davon Signale und/oder Informationen empfängt.

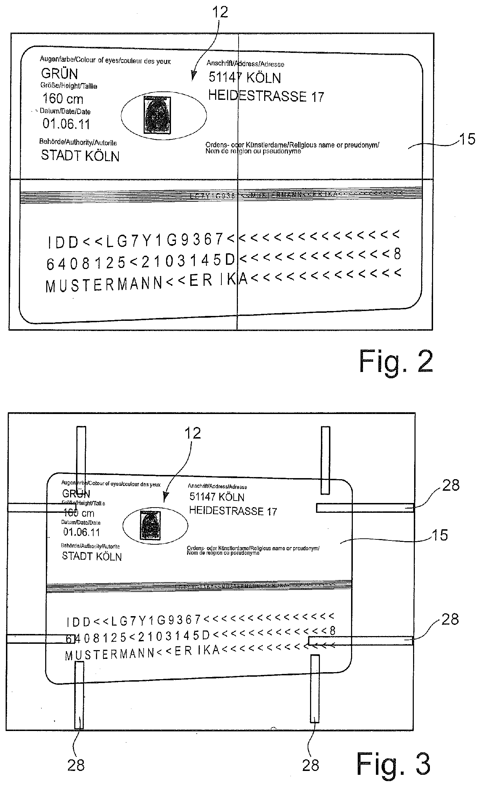

Die einzelnen aufeinander folgenden Schritte zur Durchführung des Verfahrens zum Überprüfen der winkelabhängig eingebrachten Lasermarkierung 12 werden nachfolgend anhand der Figuren 2 bis 7 erörtert:

Nachdem das zu verifizierende Dokument 15 zu den Bilderfassungseinrichtungen 17, 18, 19 in einer Prüfposition liegt, wie dies in Figur 1 dargestellt ist, wird von der Bilderfassungseinrichtung 17 eine Abbildung des Dokumentes 15 erstellt. Gleichzeitig während der Aufnahme der Abbildung ist die Beleuchtungseinrichtung 21 eingeschaltet, so dass ein störender Vordruck, Eindruck oder eine sonstige Markierung auf dem Dokument, die benachbart zur Lasermarkierung sind, eliminiert wird. Aufgrund der Neigung der Bilderfassungseinrichtung 17 unter dem Winkel α zur Normalen ist die Abbildung des Dokumentes 15, insbesondere der Lasermarkierung 12, perspektivisch verzerrt.

In einem darauf folgenden Schritt wird eine Entzerrung der Abbildung gemäß Figur 2 über beispielsweise acht gefundene Punkte 28 der verzerrten Abbildung gemäß Figur 3 rechnerisch entzerrt, woraus sich die Abbildung gemäß Figur 4 ergibt.

In einem weiteren Schritt wird gemäß Figur 5 ausgehend von der entzerrten Abbildung eine Verifikation des Text- und Bildmerkmals 29, 35 der Lasermarkierung 12 durchgeführt. Aus den auf dem Dokument 15 bereit gestellten Daten, wie beispielsweise die Identifikationsnummer, wird über die Auswerteeinrichtung 27 ein dazugehöriger Datensatz aufgerufen, um daraus dynamisch das zu verifizierende Bildmuster zu erzeugen. Dieses Bildmuster wird mit der durch die Bilderfassungseinrichtung 17 erfassten Abbildung mit einem Patternmatching-Verfahren verglichen. Ein Rahmen 30 stellt einen Suchrahmen dar, um die Position des Bildmerkmals 29 zu ermitteln. Ein Rahmen 31 zeigt die ermittelte Position des Bildmerkmals 29 durch das Patternmatching-Verfahren. Ein nachfolgender Vergleich der Abbildung und des Bildmusters in der Übereinstimmung der einzelnen Bildpunkte ermöglicht die Ermittlung eines Korrelationswertes beziehungsweise einen Korrelationskoeffizienten, woraus eine Aussage getroffen werden kann, ob das Bildmerkmal 29 in der Lasermarkierung 12 vorhanden ist oder nicht. Der Korrelationswert kann zwischen 0 % bis 100 % umfassen, wobei ab einem vorgegebenen Korrelationswert, wie beispielsweise einem Wert von größer 60 %, 70 % oder 80 % als Ergebnis die Existenz des Bildmerkmals ausgegeben wird.

In Figur 5 ist beispielsweise in einem eingeblendeten Feld 32, der durch die Bilderfassungseinrichtung 17 in die Abbildung eingeblendet wird, zunächst die Dokumentennummer angegeben. Die letzte Ziffer 74 im Feld 32 zeigt beispielsweise, dass das Bildmerkmal 29 der Lasermarkierung 12 auf dem zu überprüfenden Dokument 15 eine 74 %-ige Übereinstimmung mit dem Bildmuster aufweist, welche von der in der Datenverwaltung hinterlegten Datei beziehungsweise Bitmap erzeugt wurde. Bei diesem Verifikationsschritt wird ergänzend der Inhalt des Bildmerkmals 29 verifiziert, so dass über die alleinige Existenz des Bildmerkmals 29 auch die Position und die Vollständigkeit - also die Korrektheit - überprüft werden kann.

Zur Überprüfung des Textmerkmals 35 der Lasermarkierung 12 wird die zweite Bilderfassungseinrichtung 19 verwendet, wobei die Vorgehensweise für das Textmerkmal 35, wie beispielsweise ein Verfallsdatum, analog zum Bildmerkmal 29 erfolgt und in Figur 6 dargestellt ist. Der Rahmen 30 stellt wiederum den Suchrahmen dar, innerhalb dem eine Verifikation und Positionsbestimmung des Textmerkmals 35 erfolgen soll. Nach der Durchführung des Patternmatching-Verfahrens wird in die Bildebene der Bilderfassungseinrichtung 19 der Rahmen 31 eingeblendet, durch welchen auch die exakte Position des jeweiligen Textmerkmals 35 bestimmt ist. Ergänzend zeigt das Feld 32, welche Ziffer erkannt und mit welchem Korrelationswert diese erkannt wurde. Beispielsweise wird bei der ersten linken Ziffer im Feld 32 die Zahlenfolge 1/95 ausgegeben, was bedeutet, dass die Ziffer 1 mit einem Korrelationswert von 95 % ermittelt wurde.

Somit kann durch diese Verfahrensschritte nicht nur überprüft werden, ob das Bild- und Textmerkmal 29, 35 der Lasermarkierung 12 vorhanden sind, sondern auch deren Vollständigkeit gegeben ist.

Zur weiteren Überprüfung der Korrektheit der Lasermarkierung 12 wird gemäß Figur 7 eine Positionserkennung einer Umrandung 41 der Lasermarkierung 12 erfasst, um daraufhin die Position des Bild- und Textmerkmals 29, 35 innerhalb der Umrandung 41 der Lasermarkierung 12 zu überprüfen. Hierzu wird die Oberfläche 14 des Dokumentes 15 mit der Auflichtbeleuchtung 25 bestrahlt, so dass die Lasermarkierung 12 als abgeschattete oder dunkle Abbildung von der weiteren Bilderfassungseinrichtung 20 erfasst wird. Dadurch werden die Umrandung 41 der Lasermarkierung 12 oder die Randkanten sichtbar. Gleichzeitig erfolgt eine Positionserkennung dieser Umrandung 41 mit Hilfe einer verallgemeinerten Hough-Transformation, welche ein gradientenorientiertes Verfahren ist. Aus der Positionserkennung der Umrandung 41 der Lasermarkierung 12 sowie den ermittelten Positionen der Bild- und Textmerkmale 29, 35 kann ein Positionsversatz der Elemente 29, 35, 41 zueinander ermittelt werden.

Dieses Verfahren zur Überprüfung der winkelabhängig eingebauten Lasermarkierung 12 weist den Vorteil auf, dass das Dokument 11 keine Schrägausrichtung zur Durchführung des Verfahrens erfordert. Darüber hinaus ist eine erhöhte Qualitätssicherung durch eine vorzeitige Erkennung von Fehlern ermöglicht und ein hoher Durchsatz bei der Überprüfung von Lasermarkierungen 12 auf Dokumenten 15 gegeben.

## Patentansprüche

1. Verfahren zur Überprüfung einer winkelabhängig eingebrachten Lasermarkierung (12) mit einem Bildmerkmal (29) oder Textmerkmal (35) auf einer Oberfläche (14) eines Dokumentes (15),
- bei dem eine Abbildung des Bildmerkmals (29) oder des Textmerkmals (35) von der Lasermarkierung (12) mit einer Bilderfassungseinrichtung (19) erfasst wird, die in einem Winkel α zu einer Normalen (18) der Oberfläche (14) des Dokumentes (15) ausgerichtet wird,
- bei dem die perspektivisch erfasste Abbildung entzerrt wird,
- bei dem aus einem von einer Dokumentenverwaltung bereitgestellten und dem zu überprüfenden Dokument zugehörigen Datensatz in einer Auswerteeinrichtung (27) ein Bildmuster erzeugt wird,
- bei dem die entzerrte Abbildung mit einem Patternmatching-Verfahren gesucht und ermittelt wird und
- bei dem die entzerrte Abbildung mit dem Bildmuster auf dessen Übereinstimmung verglichen und ein Korrelationswert bestimmt wird, **dadurch gekennzeichnet, dass** eine weitere Bilderfassungseinrichtung (19) unter einem Winkel α zu der Normalen (18) der Oberfläche (14) des Dokumentes (15) und der Normalen (18) der Oberfläche (14) des Dokumentes gegenüberliegend zu der ersten Bilderfassungseinrichtung (17) ausgerichtet ist, und dass mit der einen Bilderfassungseinrichtung (17, 19) das Bildmerkmal (29) der Lasermarkierung (12) und mit der weiteren Bilderfassungseinrichtung (19, 17) das Textmerkmal (35) der Lasermarkierung (12) erfasst wird, wobei das Dokument (15) in Ruhe verbleibt und in der Auswerteeinrichtung (27) die Daten des erfassten Bildmerkmals (29) und des erfassten Textmerkmals (35) der Lasermarkierung (12) zusammengeführt sowie miteinander verglichen und überprüft werden.

2. Verfahren nach Anspruch 1, **dadurch gekennzeichnet, dass** die Oberfläche (14) des Dokumentes (15) während dem Erfassen einer Abbildung der Lasermarkierung (12) durch die Bilderfassungseinrichtung (17, 19) mit zumindest einer Beleuchtungseinrichtung (21), insbesondere einer IR-Lampe, bestrahlt wird.

3. Verfahren nach Anspruch 1, **dadurch gekennzeichnet, dass** der Datensatz mittels einer Skalierung an eine Größe der Abbildung angepasst wird.

4. Verfahren nach Anspruch 1, **dadurch gekennzeichnet, dass** mit einer weiteren Bilderfassungseinrichtung (20), deren Strahlachse (23) senkrecht zur Oberfläche (14) des Dokumentes (15) angeordnet ist, eine Umrandung der Lasermarkierung (12) erfasst und die Lage der Lasermarkierung (12) bestimmt wird.

5. Verfahren nach Anspruch 4, **dadurch gekennzeichnet, dass** koaxial zur Strahlachse (23) der weiteren Bilderfassungseinrichtung (20) ein Lichtstrahl mit einer Auflichtbeleuchtung (25) auf das Dokument (15) gerichtet wird.

6. Verfahren nach Anspruch 4, **dadurch gekennzeichnet, dass** von der Abbildung des Bild- oder Textmerkmals der Lasermarkierung (12) eine Position bestimmt und die erfasste Position der Lasermarkierung (12) mit der Lage der Umrandung der Lasermarkierung (12) verglichen und ein Positionsversatz ermittelt wird.

7. Vorrichtung zum Überprüfen einer winkelabhängig eingebrachten Lasermarkierung (12) auf einer Oberfläche (14) eines Dokumentes (15), mit einer Bilderfassungseinrichtung (17), welche in einem Winkel α zur Normalen (18) der Oberfläche (14) des Dokumentes (15) angeordnet ist, mit zumindest einer Beleuchtungseinrichtung (21), welche die Oberfläche (14) des Dokumentes (15) ausleuchtet, mit einer Auswerteeinrichtung (27), welche eine durch die Bilderfassungseinrichtung (17) erfasste Abbildung eines Bildmerkmals (29) oder Textmerkmals (35) der Lasermarkierung (12) des Dokuments (15) erfasst und mit einem durch eine Datenverwaltung bereitgestellten zugehörigen Datensatzes vergleicht, **dadurch gekennzeichnet, dass** eine weitere Bilderfassungseinrichtung (19) unter einem Winkel α zu der Normalen (18) der Oberfläche (14) des Dokumentes (15) und der Normalen (18) der Oberfläche (14) des Dokumentes gegenüberliegend zu der ersten Bilderfassungseinrichtung (17) ausgerichtet ist, und dass die eine Bilderfassungseinrichtung (17, 19) das Bildmerkmal (29) der Lasermarkierung (12) und die weitere Bilderfassungseinrichtung (19, 17) das Textmerkmal (35) der Lasermarkierung (12) erfasst, wobei das Dokument (15) in Ruhe verbleibt und die Auswerteeinrichtung (27) die Daten des erfassten Bildmerkmals (29) und des erfassten Textmerkmals (35) der Lasermarkierung (12) zusammenführt sowie miteinander vergleicht und überprüft.

8. Vorrichtung nach Anspruch 7, **dadurch gekennzeichnet, dass** eine weitere Bilderfassungseinrichtung (19) vorgesehen ist, welche spiegelbildlich zur ersten Bilderfassungseinrichtung (17) bezüglich der Normalen (18) angeordnet ist.

9. Vorrichtung nach Anspruch 7, **dadurch gekennzeichnet, dass** die zumindest eine Bilderfassungseinrichtung (17, 19) in einem Richtungswinkel von 10° bis 25°, insbesondere 13° bis 18°, gegenüber der Normalen (18) geneigt ist.

10. Vorrichtung nach Anspruch 9, **dadurch gekennzeichnet, dass** eine dritte Bilderfassungseinrichtung (20) vorgesehen ist, deren Strahlachse (23) in der Normalen (18) oder parallel zur Normalen (18) zur Oberfläche (14) des Dokumentes (15) liegt und eine Auflichtbeleuchtung (25) aufweist, welches zur Beleuchtung der Oberfläche (14) des Dokumentes (15) koaxial zur Strahlachse (23) der Bilderfassungseinrichtung (20) ausgerichtet ist.

## Claims

1. A method for verifying a laser marking (12) including an image feature (29) or text feature (35) introduced into a surface (14) of a document (15) from a given angle,
- in which an image of the image feature (29) or the text feature (35) of the laser marking (12) is captured by an image capturing device (19) which is oriented at an angle α from a normal (18) on the surface (14) of the document (15),
- in which the image captured in perspective is rectified,
- in which, from a data record provided by a document management system and belonging to the document to be verified, an image pattern is created in an evaluation device (27),
- in which the rectified image is searched for and determined by means of a pattern matching procedure, and
- in which the rectified image is compared with the image pattern for its correspondence and a correlation value is determined,
**characterised in that** another image capturing device (19) is oriented at an angle α from the normal (18) on the surface (14) of the document (15) and opposite said normal (18) on the surface (14) of the document with respect to the first image capturing device (17), and **in that** said one image capturing device (17, 19) is used to capture the image feature (29) of the laser marking (12) while said other image capturing device (19, 17) is used to capture the text feature (35) of the laser marking (12), with the document (15) remaining immobile and the data of the captured image feature (29) and of the captured text feature (35) of the laser marking (12) being merged and compared with each other and verified in the evaluation device (27).

2. The method as claimed in claim 1, **characterised in that** the surface (14) of the document (15) is illuminated with at least one lighting device (21), in particular an IR lamp, while an image of the laser marking (12) is being captured by the image capturing device (17, 19).

3. The method as claimed in claim 1, **characterised in that** the data record is adapted to the size of the image by means of scaling.

4. The method as claimed in claim 1, **characterised in that** a further image capturing device (20), the beam axis (23) of which is vertically arranged with respect to the surface (14) of the document (15), is used to capture the outline of the laser marking (12) and to determine the location of the laser marking (12).

5. The method as claimed in claim 4, **characterised in that** an incident light illumination device (25) is used to direct a light beam to the document (15) in a direction extending coaxially to the beam axis (23) of said further image capturing device (20) .

6. The method as claimed in claim 4, **characterised in that** a position of the image of the image feature or text feature of the laser marking (12) is determined and the captured position of the laser marking (12) is compared with the position of the outline of the laser marking (12) and a position offset is detected.

7. A device for verifying a laser marking (12) introduced into a surface (14) of a document (15) from a given angle, including an image capturing device (17) which is disposed at an angle α from the normal (18) on the surface (14) of the document (15), including at least one lighting device (21) which illuminates the surface (14) of the document (15), including an evaluation device (27) which detects an image of an image feature (29) or a text feature (35) of the laser marking (12) of the document (15) which has been captured by the image capturing device (17) and compares it with a matching data record provided by a data management system, **characterised in that** another image capturing device (19) is oriented at an angle α from the normal (18) on the surface (14) of the document (15) and opposite said normal (18) on the surface (14) of said document with respect to the first image capturing device (17), and **in that** said one image capturing device (17, 19) captures the image feature (29) of the laser marking (12) while said other image capturing device (19, 17) captures the text feature (35) of the laser marking (12), with the document (15) remaining immobile and the evaluation device (27) merging the data of the captured image feature (29) and the captured text feature (35) of the laser marking (12) and comparing them with each other and verifying them.

8. The device as claimed in claim 7, **characterised in that** another image capturing device (19) is provided which is arranged mirror-symmetrically to the first image capturing device (17) with respect to the normal (18).

9. The device as claimed in claim 7, **characterised in that** the at least one image capturing device (17, 19) is inclined at a directional angle of 10° to 25°, in particular 13° to 18°, with respect to the normal (18).

10. The device as claimed in claim 9, **characterised in that** a third image capturing device (20) is provided the beam axis (23) of which lies in the normal (18) or extends parallel to the normal (18) on the surface (14) of the document (15) and which has an incident light illumination device (25) which is oriented coaxially to the beam axis (23) of the image capturing device (20) for illuminating the surface (14) of the document (15) .

## Revendications

1. Procédé destiné à vérifier un marquage laser (12) pourvu d'une caractéristique d'image (29) ou d'une caractéristique de texte (35) qui est réalisé selon un angle donné sur une surface (14) d'un document (15),
- lors duquel une image de la caractéristique d'image (29) ou de la caractéristique de texte (35) du marquage laser (12) est saisie grâce à un dispositif de saisie d'images (19) qui est orienté selon un angle α par rapport à une normale (18) de la surface (14) du document (15),
- lors duquel l'image saisie en perspective est corrigée,
- lors duquel un motif est généré dans un dispositif d'évaluation (27) à partir d'un ensemble de données fourni par un système de gestion de documents et se rapportant au document à vérifier,
- lors duquel l'image corrigée est recherchée et déterminée grâce à un procédé d'appariement de motifs et
- lors duquel l'image corrigée est comparée au motif pour savoir s'il y a concordance et une valeur de corrélation est déterminée,
**caractérisé en ce qu'**un autre dispositif de saisie d'images (19) est orienté selon un angle α par rapport à la normale (18) de la surface (14) du document (15), et ce à l'opposé de la normale (18) de la surface (14) dudit document par rapport au premier dispositif de saisie d'images (17), et **en ce que** la caractéristique d'image (29) du marquage laser (12) est saisie grâce à l'un desdits dispositifs de saisie d'images (17, 19) et que la caractéristique de texte (35) du marquage laser (12) est saisie grâce à l'autre desdits dispositifs de saisie d'images (19, 17), le document (15) demeurant ce faisant au repos, et **en ce que**, dans le dispositif d'évaluation (27), les données de la caractéristique d'image saisie (29) et de la caractéristique de texte saisie (35) du marquage laser (12) sont réunies, comparées les unes aux autres et vérifiées.

2. Procédé selon la revendication 1, **caractérisé en ce que**, pendant qu'une image du marquage laser (12) est saisie par le dispositif de saisie d'images (17, 19), la surface (14) du document (15) est éclairée grâce à au moins un dispositif d'éclairage (21), en particulier une lampe IR.

3. Procédé selon la revendication 1, **caractérisé en ce que** l'ensemble de données est adapté à une grandeur de l'image au moyen d'une mise à l'échelle.

4. Procédé selon la revendication 1, **caractérisé en ce qu'**un contour du marquage laser (12) est saisi grâce à un autre dispositif de saisie d'images (20) dont l'axe de faisceau (23) est disposé perpendiculairement à la surface (14) du document (15) et **en ce que** la position dudit marquage laser (12) est déterminée.

5. Procédé selon la revendication 4, **caractérisé en ce qu'**un rayon lumineux est dirigé sur le document (15) de manière coaxiale à l'axe de faisceau (23) de l'autre dispositif de saisie d'images (20) grâce à un dispositif d'éclairage à lumière incidente (25).

6. Procédé selon la revendication 4, **caractérisé en ce qu'**une position de l'image de la caractéristique d'image ou de texte du marquage laser (12) est déterminée et que la position saisie du marquage laser (12) est comparée à la position du contour dudit marquage laser (12) et qu'un décalage de position est déterminé.

7. Dispositif destiné à vérifier un marquage laser (12) réalisé selon un angle donné sur une surface (14) d'un document (15), pourvu d'un dispositif de saisie d'images (17) qui est disposé selon un angle α par rapport à la normale (18) de la surface (14) du document (15), pourvu d'au moins un dispositif d'éclairage (21) qui éclaire la surface (14) du document (15), pourvu d'un dispositif d'évaluation (27) qui saisit une image d'une caractéristique d'image (29) ou d'une caractéristique de texte (35) du marquage laser (12) du document (15) qui a été saisie par le dispositif de saisie d'images (17) et compare celle-ci à un ensemble de données s'y rapportant fourni par un système de gestion de données, **caractérisé en ce qu'**un autre dispositif de saisie d'images (19) est orienté selon un angle α par rapport à la normale (18) de la surface (14) du document (15), et ce à l'opposé de la normale (18) de la surface (14) dudit document par rapport au premier dispositif de saisie d'images (17), et **en ce que** l'un desdits dispositifs de saisie d'images (17, 19) saisit la caractéristique d'image (29) du marquage laser (12) et que l'autre desdits dispositifs de saisie d'images (19, 17) saisit la caractéristique de texte (35) du marquage laser (12), le document (15) demeurant ce faisant au repos, et **en ce que** le dispositif d'évaluation (27) réunit les données de la caractéristique d'image saisie (29) et de la caractéristique de texte saisie (35) du marquage laser (12), les compare les unes aux autres et les vérifie.

8. Dispositif selon la revendication 7, **caractérisé en ce qu'**il est prévu un autre dispositif de saisie d'images (19) qui est disposé de manière symétrique au premier dispositif de saisie d'images (17) par rapport à la normale (18).

9. Dispositif selon la revendication 7, **caractérisé en ce que** ledit au moins un dispositif de saisie d'images (17, 19) est incliné selon un angle de direction compris entre 10° et 25°, en particulier entre 13° et 18°, par rapport à la normale (18).

10. Dispositif selon la revendication 9, **caractérisé en ce qu'**il est prévu un troisième dispositif de saisie d'images (20) dont l'axe de faisceau (23) se situe sur la normale (18) ou est parallèle à la normale (18) de la surface (14) du document (15) et lequel présente un dispositif d'éclairage à lumière incidente (25) qui, en vue d'éclairer la surface (14) du document (15), est orienté coaxialement à l'axe de faisceau (23) du dispositif de saisie d'images (20).
